# NEW EUROPEAN PATENT SPECIFICATION

(11) **EP 0 061 662 B2**
(45) Date of publication and mention of the opposition decision: **11.08.1993**
(45) Mention of the grant of the patent: 23.12.1987
(21) Application number: 82102204.3
(22) Date of filing: 18.03.1982
(51) Int. Cl.: G05G 1/04

(54) **Preformed integral covering, particularly for motorvehicle gear shift levers**
Vorgeformter integrierter Überzug, insbesondere für Getriebeschalthebel von Motorfahrzeugen
Revêtement intégral préformé en particulier pour un levier de boîte de vitesses de véhicules à moteur

(30) Priority: 01.04.1981 IT 5307081 U
(43) Date of publication of application: 06.10.1982
(60) Divisional application: 86104654.8
(73) Proprietor: LEAR S.n.c. di FOGGINI & C., I-10043 Orbassano (Province of Torino) (IT)
(72) Inventor: Foggini, Giovanni, I-10121 Torino (IT)
(74) Representative: Modiano, Guido, Dr.-Ing.

(56) References cited:
- DE-A- 1 655 821
- DE-A- 2 252 392
- DE-A- 2 353 417
- DE-A- 3 028 531
- US-A- 4 178 806

## Description

This invention relates to a covering particularly intended for motorvehicle gear shift levers.

Currently used gearshift levers comprise a metal rod projecting from a central cabinet on the car floor, commonly termed "console", and are provided with a knob grip, as well as with a bellows seal arranged to protect the lever articulation joint at said console. The knob, which may have various configurations and sizes, is threaded onto or snap engaged with the rod upper end; the bellows seal is fitted over the rod and generally jointed or damped to the console base. This prior arrangement is scarcely effective as regards the bellows capability to prevent dust and moisture penetration, and is inconvenient when the bellows seal itself is to be replaced.

DE-A-2 353 417 discloses a gear shift lever similar to the above described type in which the problem of preventing dust and moisture penetration into the gearshift lever mechanism and the assembling of the covering on the gear shift lever has not been considered. In addition, in this prior publication, the covering is made of two separate parts. The same is true for DE-A-2 252 392 in which the safety problem is considered. The problem met by the invention should be envisaged in the difficulty of achieving the task of preventing moisture and dust penetration into the gear shift lever mechanism by means of a covering which should be, at the same time, easy to mount and reliably fixed onto the gear shift lever rod. In fact easy mounting condition has the tendency to decrease the sealing efficiency of a covering and to decrease also the fixing reliability of the same onto the rod of the gear shift lever. The above defined problem is solved by the invention as defined in claim 1.

Advantageously, the covering comprises a central sleeve enclosing the lever rod and terminating, without continuity breaks, at one end in a knob, including a force-fit retaining seat for the rod end, and, at the other end, in a bellows seal formed with a groove adapted to cooperate with a mating check seat provided on the console.

The invention will be more clearly understood by making reference to the detailed description which follows, in conjunction with the accompanying illustrative, and not limitative, drawings, where:
Figure 1 is a partly sectional elevation view of the integral covering according to one embodiment of the invention;
Figure 2 is a diagrammatic view showing the covering installed;
Figure 3 is a partly sectional elevation view of the covering, according to a modified embodiment of this invention;
Figure 4 is a cross-sectional view taken along the line IV IV of Figure 3;
Figure 5 is a cross-sectional view taken along the line V-V of Figure 3;
Figure 6 is a further cross-sectional view, taken along the line VI-VI of Figure 3;
Figure 7 is a sectional view taken along the line VII-VII of Figure 6; and

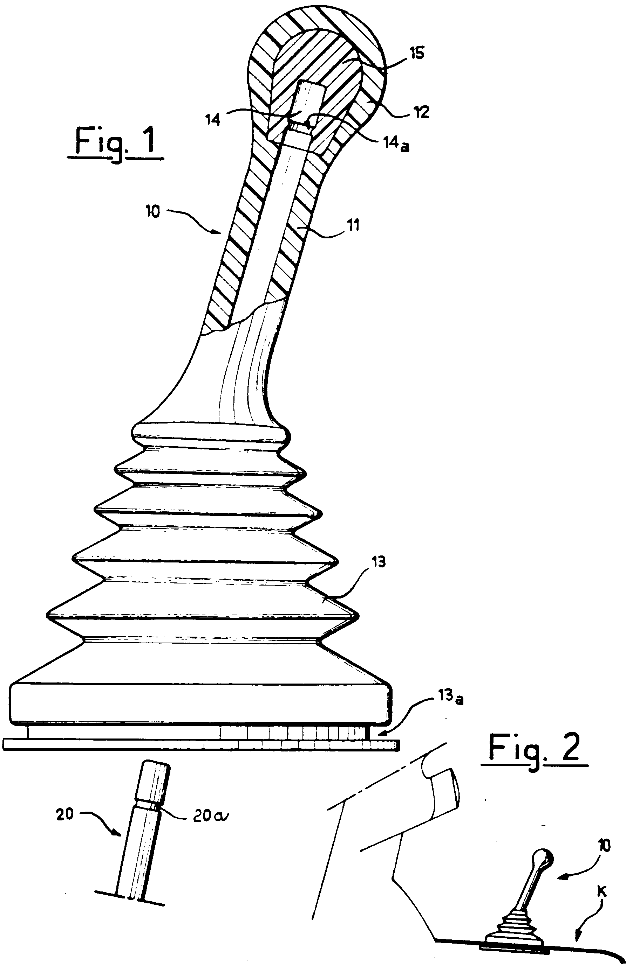

Making reference initially to Figures 1 and 2, the reference numeral 10 generally designates the covering of this invention, and 20 the end of the metal rod constituting the gear shift lever of a passenger car.

In accordance with this invention the covering 10, formed from a polymeric material such as soft PVC, comprises a central tubular sleeve as sheath 11 which is terminated, as a one-piece construction and without continuity breaks, at one end in a knob grip 12, and, at the other end, in a bellows seal 13 for protecting the lever articulation joint or connection.

The knob 12 is provided with a retaining seat 14 adapted to accommodate the end 20 of the rod in force-fit relationship. The returning seat 14 is formed in an insert 15, preferably made of a hard polymeric material embedded in the knob 12 by a co-molding process, and is provided with an O-ring 14a adapted to engage, by elastic deformation of its material, in a corresponding groove 20a on the rod upper end 20.

It will be understood that the cup-like formation of the covering which defines the knob 12, defines internally a hollow space in which the insert 15 is arranged, whereby it matingly engages internally said cup-like formation with a structurally co-molded relationship therewith.

The bellows seal 13, preferably in the shape of a truncated pyramid, is in turn provided with an end groove 13a adapted to be engaged by the edge of a corresponding opening provided in the console K, wherefrom extends the gear shift lever.

The preformed covering together with the co-molded insert can be easily assembled by fitting it over the rod and pushing axially on the knob to produce the force-fit engagement of the rod end in the seat 14, as specified hereinabove. Then, the groove 13a of the bellows seal is engaged with the edge of the opening provided in the console K, as clearly shown in Figure 2. The covering continuity ensures a perfectly tight seal, impervious to dust and moisture, while imparting the shift lever a pleasing aesthetic appearance.

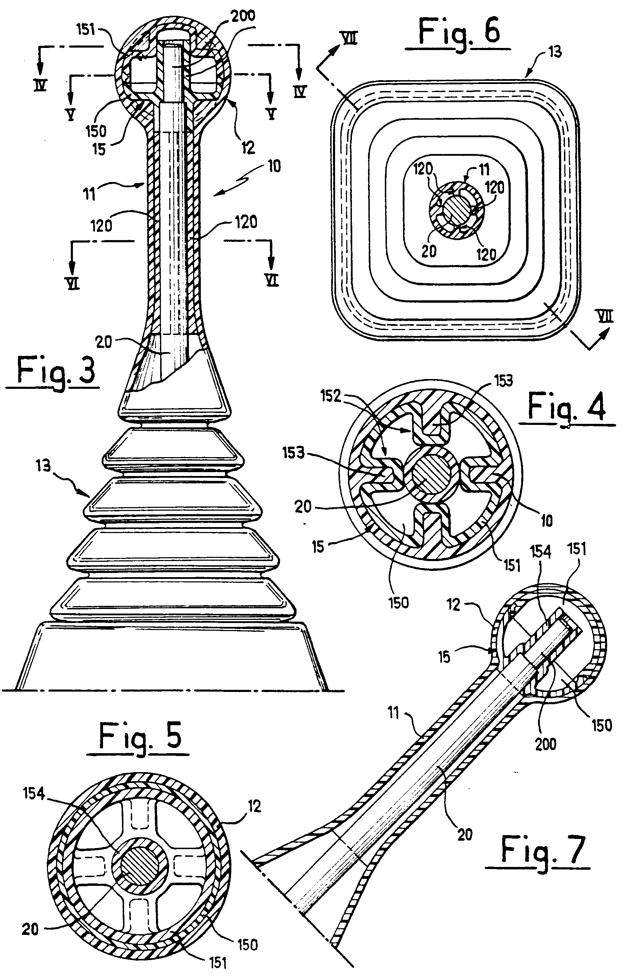

In the modified embodiment shown in Figures 3 to 7, the insert 15 comprises a hollow element formed by two juxtaposed half-shells 150-151 of a rigid polymeric material. Such half-shells define a spherical profile solid with recessed radial lugs 152 in cruciform relationship, which delimit corresponding outer depressions 153 wherein the material of the covering 10 (Figure 4) spreads to prevent any displacement of the insert relatively to the covering. The bottom half-shell 150 carries an axial tube 154 which, at the upper portion thereof, is surrounded, for retaining and stiffening purposes, by the radial lugs 152 of the top half-shell 151. In the tube 154, there is force-fitted the depressed end 200 of the rod 20 which is urged to abut against the end of the tube. Again for lightening reasons, as well as to facilitate the fitting of the coating or covering over the lever 20, the sleeve or sheath portion 11 of the covering has a bore of significantly larger diameter than the rod 20, and is provided with axial ribs 120, separated by respective lightening voids, which ribs lay adjacent the lever 20 with the covering fitted in place.

## Claims

1. A gear shift lever covering having a sleeve portion (11) which, in use, covers at least the upper part (20) of the rod of the gear shift lever, and a bellows-like portion (13) which, in use, covers at least the zone of the articulation joint of the lever, the covering having a top portion of knob-like shape (12) defined by a cup-like formation at the upper end of and integral with said sleeve portion (11), the interior of said cup-like formation of the covering (10) defining a hollow space which, in use of the covering, is above the upper part (20) of the lever rod, characterized in that
a) said bellows-like portion (13) is an integral part of said sleeve portion (11) so that said bellows-like portion (13), said sleeve portion (11) and said cup-like formation constitute a one piece-member, and
b) within said hollow space an insert formation (15) is arranged in mating engagement with the interior of said cup-like formation, which insert formation, in use of the covering, is fitted on the upper part (20) of said rod, and in that said insert formation (15) and said single piece member are made of polymeric material and have structurally a mutual co- moulded relationship.

2. A covering according to claim 1, wherein said cup-like formation (12), said sleeve portion (11) integral therewith and said bellows-like portion are of soft polymeric material and said insert formation (15) is of hard polymeric material and wherein said insert formation has a retaining seat (14) for the fitting engagement with the upper part (20) of said rod and wherein said bellows-like portion (13) has on its lower end portion a groove (13a) for engagement with a corresponding retaining seat provided on the console (K) wherefrom the lever projects.

3. A covering according to claims 1-2, wherein said retaining seat (14) for the fitting engagement with the lever rod upper part (20) is of cylindrical shape and has an internally projecting O-ring formation (14a) adapted to engage, by deformation of its material, into a corresponding groove (20a) on the lever rod upper part (20).

4. A covering according to claims 1-3, wherein said insert formation (15) comprises two juxtaposed half shells (150, 151) with a substantially spherical lugged profile and including a tube portion (154) adapted to be force-fitted over the end (200) of said lever rod (20), said sleeve portion (11) of the covering having axial ribs (120) in engagement with said lever rod (20).

5. A covering according to claim 4, wherein said half-shells (150, 151) are made of a hard polymeric material and define a generally spherical contour having internally recessed radial lugs (152) integral therewith in cruciform relationship with each other, said lugs (152) defining outerde- pressions ( 153) into which the covering material is spread in co-molding relationship therewith to prevent displacement of said insert formation with respect to said covering.

6. A covering according to claims 4-5, wherein said tube portion (154) extends upwardly from the bottom portion of said half shells (150) and is surrounded and engaged at the top portion thereof by the radial lugs (152) of the top half-shell (151) for retention and stiffening action thereon.

## Patentansprüche

1. Verkleidung für Getriebeschalthebel mit einem Manschettenteil (11), der im Gebrauch mindestens den oberen Teil (20) der Stange des Getriebeschalthebels abdeckt, und einem balgartigen Teil (13), der im Gebrauch mindestens die Zone der Gelenkverbindung des Hebels abdeckt, wobei die Verkleidung einen oberen knopfförmigen Endteil (12) aufweist, der von einer becherartigen Ausbildung an dem oberen Ende des Manschettenteils (11) gebildet und einstückig mit diesem ist, und das Innere der becherartigen Ausbildung der Verkleidung (10) einen Hohlraum definiert, der beim Gebrauch der Verkleidung oberhalb des oberen Teils (20) der Hebelstange ist, dadurch gekennzeichnet, daß
a) der balgartige Teil (13) ein integraler Teil des Manschettenteils (11) ist, so daß der balgartige Teil (13), der Manschettenteil (11) und die becherförmige Ausbildung ein einteiliges Element bilden, und
b) innerhalb des Hohlraums ein Einsatz (15) in Paßberührung mit dem Inneren der becherförmigen Ausbildung angeordnet und beim Gebrauch der Verkleidung auf den oberen Teil (20) der Stange aufgepaßt ist, und daß der Einsatz (15) und das einteilige Element aus einem Polymermaterial bestehen und strukturell ein Mitformverhältnis aufweisen.

2. Verkleidung nach Anspruch 1, dadurch gekennzeichnet, daß die becherförmige Ausbildung (12), der mit ihr integrale Manschettenteil (11), und der balgartige Teil aus weichem Polymermaterial bestehen und daß der Einsatz (15) aus hartem Polymermaterial besteht und einen Haltesitz (14) zum Einpassen des oberen Teiles (20) der Stange aufweist, wobei der balgartige Teil (13) an seinem unteren Endabschnitt eine Nut (13a) zum Eingriff mit einem entsprechenden Haltesitz auf der Konsole (K), von welcher der Hebel wegsteht, besitzt.

3. Verkleidung nach den Ansprüchen 1-2, dadurch gekennzeichnet, daß der Haltesitz (14) für den Paßeingriff mit dem oberen Teil (20) der Hebelstange eine zylindrische Form besitzt und eine innen wegstehende O-Ring-Ausbildung (14a) aufweist, welche befähigt ist, durch Verformung ihres Materials in eine entsprechende Nut (20a) auf dem oberen Teil (20) der Hebelstange einzugreifen.

4. Verkleidung nach den Ansprüchen 1-3, dadurch gekennzeichnet, daß der Einsatz (15) aus zwei nebeneinanderliegenden Halbschalen (150,151) mit einem im wesentlichen kugeligem nasenförmigem Profil besteht und einen Schlauchteil (154) aufweist, der auf das Ende (200) der Hebelstange (20) aufziehbar ist, wobei der Manschettenteil (11) der Verkleidung axiale Rippen (120), die an die Hebelstange (20) angreifen, besitzt.

5. Verkleidung nach Anspruch 4, dadurch gekennzeichnet, daß die Halbschalen (150,151) aus hartem Polymermaterial bestehen und eine im wesentlichen kugelförmige Kontur mit innen zurückspringenden, radialen und mit ihnen einteiligen, zueinander kreuzförmig liegenden Nasen (152) definieren, welche Nasen (152) äußere Vertiefungen (153) begrenzen, in welche das Verkleidungsmaterial im Mitformverhältnis eingespritzt ist, um eine Verschiebung des Einsatzes in bezug auf die Verkleidung zu verhindern.

6. Verkleidung nach den Ansprüchen 4-5, dadurch gekennzeichnet, daß sich der Schlauchteil (154) vom Bodenteil der Halbschalen (150) nach oben erstreckt und an seinem oberen Teil von den radialen Nasen (152) der oberen Halbschale (151) umgeben ist und mit diesen im Eingriff steht, um eine Halte- und Versteifungswirkung darauf auszuüben.

## Revendications

1. Gainage pour levier de changement de vitesse, comprenant une portion de manchon (11) qui recouvre en utilisation au moins la partie supérieure (20) de la tige du levier de vitesse, et une portion (13) en forme de soufflet qui, en utilisation, recouvre au moins la zone de la liaison d'articulation du levier, le gainage comprenant une portion supérieure en forme de boule (12) définie par une partie en forme de coupelle réalisée à l'extrémité supérieure de, et d'un seul tenant avec ladite portion de manchon (11), l'intérieur de la partie en forme de coupelle du gainage (10) définissant un espace creux, qui, en utilisation du gainage est disposé au-dessus de la partie supérieure (20) de la tige du levier, caractérisé en ce que
a) ladite portion (13) en forme de soufflet est d'un seul tenant avec ladite portion de manchon (11) si bien que ladite portion (13) en forme de soufflet, ladite portion de manchon (11) et ladite partie en forme de coupelle constituent un élément d'une seul pièce, et
b) à l'intérieur dudit espace creux un insert (15) est disposé en contact complémentaire avec l'intérieur de ladite partie en forme de coupelle, ledit insert, en utilisation du gainage, étant monté sur la partie supérieure (20) de ladite tige et en ce que ledit insert (15) et ledit élément d'une seule pièce sont réalisés en matériau polymère et ont une relation structurelle mutuelle obtenue par co-moulage.

2. Gainage selon la revendication 1, caractérisé en ce que ladite partie en forme de coupelle (12), ladite portion de manchon (11) d'un seul tenant avec la précédente et ladite portion en forme de soufflet sont en matériau polymère souple et en ce que ledit insert (15) est en matériau polymère dur et en ce que ledit insert comprend un siège de retenue (14) pour assurer l'assemblage d'engagement avec la partie supérieure (20) de ladite tige et en ce que ladite portion en forme de soufflet (13) porte à sa portion d'extrémité inférieure une rainure (13a) qui vient s'emboîter avec un siège de retenue correspondant prévu sur la console (K) dont fait saillie le levier.

3. Gainage selon la revendication 1, 2, caractérisée en ce que ledit siège de retenue (14) destiné à l'assemblage par emboîtement avec la partie supérieure (20) de la tige du levier a une forme cylindrique et une partie en forme de joint torique (14a) faisant saill ie vers l'intérieur et qui est adaptée à s'engager, par déformation de son matériau, dans une rainure correspondante (20a) de la partie supérieure (20) de la tige du levier.

4. Gainage selon les revendications 1 à 3, caractérisé en ce que ledit insert (15) comprend deux demi-coquilles juxtaposées (150, 151) avec un profil sensiblement sphérique à bossages et comprenant une portion de tube (154) conçue pour être emmanchée à force sur l'extrémité (200) de ladite tige de levier (20), ladite portion de manchon (11) du gainage ayant des nervures axiales (120) qui s'engagent avec ladite tige de levier (20).

5. Gainage selon la revendication 4, caractérisé en ce que les demi-coquilles (150, 151) sont fabriquées en matériau polymère dur et définissent un contour généralement sphérique ayant à l'intérieur des bossages radiaux en renfoncement (152) d'un seul tenant avec les demi-coquilles en relation cruciforme entre elles, lesdites pattes (152) définissant des creux extérieurs (153) dans lesquels le matériau du gainage est étalé en relation de co-moulage avec ces creux pour empêcher le déplacement dudit insert par rapport audit gainage.

6. Gainage selon les revendications 4, 5, caractérisé en ce que ladite portion de tube (154) s'étend verticalement vers le haut à partir de la portion inférieure desdites demi-coquilles (150) et est entourée par la portion supérieure de ces demi-coquilles tout en étant engagée avec elles grâce aux bossages radiaux (152) de la demi-coquille supérieure (151) pour exercer sur elle une action de maintien et de raidissement.
